# EUROPÄISCHE PATENTSCHRIFT

(11) **EP 2 650 418 B1**
(45) Veröffentlichungstag und Bekanntmachung des Hinweises auf die Patenterteilung: **02.05.2018**
(21) Anmeldenummer: 13154863.8
(22) Anmeldetag: 12.02.2013
(51) Int. Cl.: D04C 3/48, D04C 1/02

(54) **Verfahren zur Herstellung von gekrümmten Faserhalbzeugen**
Method for producing curved semi-finished products
Procédé de fabrication de demi-produits courbés en fibres

(30) Priorität: 29.03.2012 DE 102012205150
(43) Veröffentlichungstag der Anmeldung: 16.10.2013
(73) Patentinhaber: Bayerische Motoren Werke Aktiengesellschaft, 80809 München (DE)
(72) Erfinder: Pfitzer, Hanno, 84095 Furth (DE); Veihelmann, Bernd, 84034 Landshut (DE)

(56) Entgegenhaltungen:
- EP-A1- 0 243 119
- DE-B- 1 034 727
- US-A- 1 563 564
- US-B1- 6 182 398

## Beschreibung

Die Erfindung betrifft ein Verfahren zur Herstellung von Faserhalbzeugen, wobei eine Flechtvorrichtung eine Vielzahl von Fasern in ein bandförmiges Geflecht flechtet.

Die Verwendung von Bauteilen aus Faserverbundmaterialien findet mehr und mehr Anwendung in den verschiedensten Bereichen der Technik, insbesondere auch im Automobilbereich. Hierbei werden beispielsweise Kohlenstofffasern, Glasfasern oder Aramidfasern eingesetzt, um gegenüber den bisher üblicherweise verwendeten Metallteilen leichtere, gleichzeitig aber mindestens ebenso stabile Bauteile herzustellen. Hierzu wird bei derzeitigen Verfahren zur Herstellung derartiger Bauteile ein aus (Kohlenstoff-)Fasern gebildetes textiles Halbzeug flächig ausgelegt, und anschließend die spätere Bauteilform grob herausgeschnitten. Besonders bei gekrümmten Bauteilen entsteht hierbei eine große Menge an Verschnitt, der nicht unmittelbar weiter verwendbar ist. Textiles Halbzeug aus den oben genannten technischen Fasern (Kohlenstofffasern, Glasfasern, etc.) ist teuer, sodass ein großer Bedarf an einem Verfahren besteht, das möglichst geringe oder besser noch keine Verschnittmengen ermöglicht.

Verfahren zur Erzeugung von gekrümmten Faserhalbzeugen sind beispielsweise aus der DE 1034727 B oder der US 6,182,398 B1 bekannt.

Vor diesem Hintergrund ist es die Aufgabe der Erfindung, ein Verfahren bereitzustellen, mit dem ein textiles Halbzeug aus technischen Fasern herstellbar ist, bei dem auch bei gekrümmten Bauteilformen eine nur sehr geringe Verschnittmenge des Fasermaterials entsteht.

Diese Aufgabe wird durch ein Verfahren gemäß Anspruch 1 gelöst.

Erfindungsgemäß ist hierbei vorgesehen, Faserhalbzeuge durch ein Flechtverfahren bereits in der für die nachfolgenden Umformverfahren gewünschten zweidimensionalen Kontur herzustellen, bei dem das bisher nötige Ausschneiden überflüssig wird. Bei der Weiterverarbeitung des Faserhalbzeugs zum endgültigen dreidimensionalen Bauteil erfolgen ebenfalls keine Verschnitt erzeugende Verfahrensschritte.

Erfindungsgemäß ist vorgesehen, mittels einer Flechtvorrichtung eine Vielzahl der technischen Fasern in ein bandförmiges Geflecht mit in Querrichtung gesehen einem ersten Außenbereich und einem zweiten Außenbereich zu flechten, wobei die Fasern im geflochtenen Zustand von einer Abzugsvorrichtung aufgenommen werden, die zumindest abschnittsweise entlang einer Maschinenrichtung eine vordefinierte Krümmung aufweist, wobei das Flechten der Fasern zur Erzeugung der Krümmung im Faserhalbzeug im ersten Außenbereich mit einer größeren Abzugsgeschwindigkeit als im zweiten Außenbereich erfolgt.

Ferner kann zwischen den Außenbereichen ein Zentralbereich vorgesehen sein. Die Breite des Zentralbereichs und der ersten und zweiten Außenbereiche ist frei wählbar, wobei sich der Zentralbereich auch eine Nullbreite aufweisen kann, das heißt, dass die Außenbereiche an der Bauteilmittelachse angrenzen.

Die technischen Fasern sind auf Spulen angeordnet und werden während des Flechtprozesses an einem am Randbereich der Abzugsvorrichtung befindlichen Flechtpunk verflochten. Dadurch dass die Form der Abzugsvorrichtung selbst die Krümmung des späteren Bauteils aufweist, kann sie eine in dem ersten und zweiten Außenbereich entsprechende größere oder kleinere Abzugsgeschwindigkeit hervorrufen, wodurch die Krümmung des Faserhalbzeugs erzeugt wird. Bei einer größeren Abzugsgeschwindigkeit im ersten Außenbereich gegenüber dem zweiten Außenbereich wird eine Krümmung des entstehenden Faserhalbzeugs in Richtung des zweiten Außenbereichs bewirkt, wobei der Krümmungsradius unmittelbar von der Differenz der jeweiligen Abzugsgeschwindigkeit beeinflusst wird. Bei einer konstanten Differenz der Abzugsgeschwindigkeit im ersten Außenbereich gegenüber dem zweiten Außenbereich entsteht somit ein Faserhalbzeug mit konstantem Krümmungsradius.

Es versteht sich, dass das erfindungsgemäße Verfahren nicht auf einen bestimmten Krümmungsradius beschränkt ist, da über die Form der Abzugsvorrichtung variable Abzugsgeschwindigkeiten im ersten und zweiten Außenbereich über die Bauteillänge in Maschinenrichtung vordefinierbar sind. So können abschnittsweise Geraden gebildet sein, in denen die Abzugsgeschwindigkeiten in beiden Außenbereichen gleich groß sind. Auch kann ein S-förmiges Faserhalbzeug hergestellt werden, in dem die ersten und zweiten Außenbereiche während der Fertigungsverfahrens vertauscht angesehen werden.

In einer bevorzugten Ausführung erfolgt das Flechten über den gesamten Flechtprozess entlang dreier Faserorientierungen, wobei eine sich in Maschinenrichtung erstreckende Mittelachse des Faserhalbzeugs einer 0 GRAD-Orientierung entspricht und die Außenbereiche mit je einer ± 20-80 GRAD-Orientierung zur im Zentrum liegenden 0 GRAD-Orientierung geflochten werden. Da der Flechtpunkt örtlich konstant ist, erfolgt das Flechten einer Krümmung mit einem mitwandernden Koordinatensystem, bei dem die Mitte des zu flechtenden Bauteils stets der 0 GRAD-Orientierung entspricht. Der Zentralbereich um die 0 GRAD-Orientierung ist vorzugsweise in Querrichtung breit ausgebildet, sodass die Faserflechtung im stärker gekrümmten Bereich des ersten Außenbereichs nicht mit zu eng gezogenen Maschen erfolgt. Durch die drei Faserorientierungen kann die notwendige Winkel- und Maßhaltigkeit der Krümmung des entstehenden Faserhalbzeugs über die gesamte Längenerstreckung eingestellt und gewährleistet werden.

Ferner ist vorteilhaft, dass mit dem erfindungsgemäßen Verfahren ermöglich ist, zumindest abschnittsweise im dem ersten und zweiten Außenbereich kostengünstigeres Fasermaterial als im Zentralbereich einzusetzen, sodass nur für die Funktion des Bauteils erheblichen Bereiche des Zentralbereichs und der Außenbereiche tatsächlich mit dem hochwertigeren und teureren Fasermaterial gebildet sind. Dabei ist über die Bestückung der das Rohmaterial bereitstellenden Faserspulen frei einstellbar, wie breit die jeweiligen Bereiche mit dem einen oder anderen Fasermaterial gebildet werden sollen.

Die durch das erfindungsgemäße Verfahren hergestellten Faserhalbzeuge werden zur Bauteilfertigstellung anschließend mittels im Stand der Technik bekannter Verfahren (z.B. RTM-Verfahren) imprägniert und umgeformt. Für diese Verfahren ist günstig, einen Prozessrand an dem Bauteil vorzusehen, an welchem es gegriffen und in Position gebracht werden kann, welcher jedoch für das spätere Bauteil keine strukturtechnische oder funktionstechnische Rolle spielt. Es ist somit günstig, zumindest den Prozessrand, das heißt die in Querrichtung außenseitig angeordneten Randabschnitte des ersten und zweiten Außenbereichs mit dem kostengünstigeren Fasermaterial herzustellen. Beispielsweise kann somit vorgesehen sein, den Zentralbereich und Bereiche des ersten und zweiten Außenbereichs mit Kohlenstofffasern und den Prozessrand mit kostengünstigeren Glasfasern herzustellen.

Erfindungsgemäß ist ferner vorgesehen, als Abzugsvorrichtung eine gekrümmte Laufkette, beispielsweise eine Nadelkette, oder eine gekrümmte Raupenabzugsvorrichtung zu verwenden. Die verwendete Abzugsvorrichtung muss in Ihrer Form anpassbar sein und Mittel aufweisen, um die unterschiedlichen Abzugsgeschwindigkeiten zu gewährleisten. In einer vorteilhaften Ausführung ist die Abzugsvorrichtung hierfür segmentiert ausgebildet, wobei die Vielzahl der Segmente der Abzugsvorrichtung in Maschinenvorrichtung eine oder mehrere vorbestimmte Krümmungen bereitstellen können. Die unterschiedliche Abzugsgeschwindigkeit kann durch in den Außenbereichen mit unterschiedlicher Geschwindigkeit laufenden und somit die Fasern mit unterschiedlicher Geschwindigkeit abziehenden Laufketten erzielt werden.

Bei Beginn der Herstellung des jeweiligen Faserhalbzeugs fixiert die Abzugsvorrichtung die Fasern solange, bis die inneren Reibungskräfte zwischen den Fasern groß genug sind, das Fasergeflecht in Form zu halten. Während des Flechtprozesses werden die Fasern auf der Abzugsvorrichtung bis zur Fertigstellung des Faserhalbzeugs gehalten. Die Form des fertiggestellten Faserhalbzeugs entspricht letztlich der der Abzugsvorrichtung.

Nach Fertigstellung des Faserhalbzeugs wird dieses mittels eines Binders zu einem Zwischenprodukt vorfixiert, bei dem die Fasern nicht mehr gegeneinander verrutschen können. Das Zwischenprodukt wird anschließend mit Harz (Epoxidharz) imprägniert und anschließend in die gewünschte Endform umgeformt. Als Binder können Pulver auf Basis einer Komponente des Harzes eingesetzt werden.

Andere vorteilhafte Weiterbildung der Erfindung sind in den Unteransprüchen gekennzeichnet beziehungsweise werden nachstehend zusammen mit der Beschreibung der bevorzugten Ausführung der Erfindung anhand der Figuren näher dargestellt.

Es zeigen:
Fig.1 eine Flechtvorrichtung zur Durchführung des erfindungsgemäßen Verfahrens, und
Fig.2 ein mit dem erfindungsgemäßen Verfahren gefertigtes Faserhalbzeug mit drei Faserorientierungen.

Die Figuren zeigen für das erfindungsgemäße Verfahren verwendete Bauteile beispielhaft schematisch, wobei nur die Elemente dargestellt sind, die für das Verständnis der Erfindung notwendig sind.

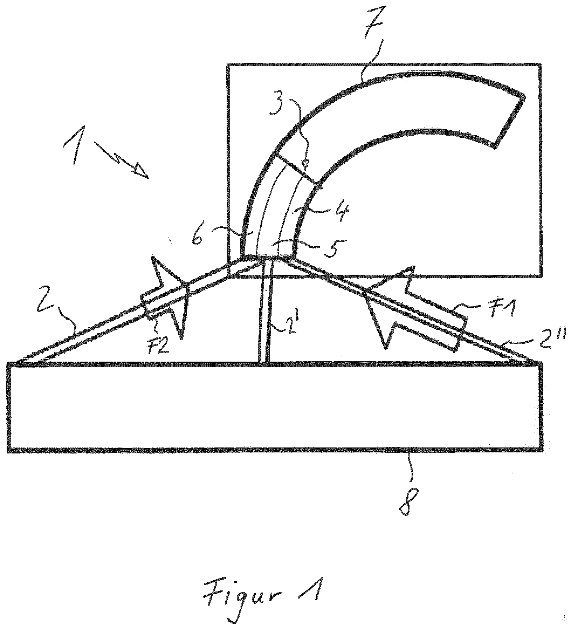

In Figur 1 ist einen Flechtvorrichtung 1 dargestellt, bei der mit einer Flechtmaschine 8 und einer Abzugsvorrichtung 7 ein gekrümmtes Faserhalbzeug entlang seiner Bauteilachse flechtend hergestellt werden kann. Die Abzugsvorrichtung 7 weist die gewünschte, letztliche Form des Faserhalbzeugs auf, sodass sich das bandförmige Geflecht 3 während des Fertigungsverfahrens entlang der Form der Abzugsvorrichtung 7 entwickelt. Dargestellt ist eine Kontur des Faserhalbzeugs als einfache Krümmung. Über die Krümmung der Abzugsvorrichtung 7 wird auf die durch die Flechtmaschine 8 zugeführten Fasern 2, 2', 2" eine in dem ersten und zweiten Außenbereich 4, 6 jeweils unterschiedliche Abzugsgeschwindigkeit F1, F2 erzeugt, welche die Krümmung des Geflechts 3 und des späteren Faserhalbzeugs hervorrufen. Der erste Außenbereich 4 ist also immer der Bereich, in den die Krümmung gerichtet ist; im gezeigten Fall liegt der erste Außenbereich 4 rechtsseitig von dem zweiten Außenbereich 6. Die Abzugsgeschwindigkeit F1 ist zur Erzeugung der dargestellten Krümmung in Richtung "Rechts" größer als die Abzugsgeschwindigkeit F2 im Bereich des zweiten Außenbereichs 6. Der Unterschied der Abzugsgeschwindigkeiten F1, F2 wird unmittelbar durch den Radius der Krümmung bedingt. Ein derart hergestelltes Faserhalbzeug weist die gewünscht Form auf, ohne dass es zurechtgeschnitten werden muss.

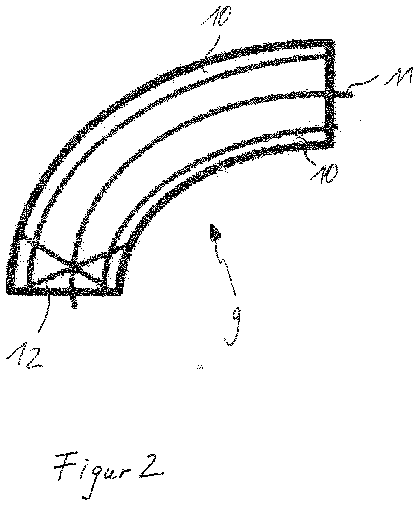

In Figur 2 ist beispielhaft schematisch dargestellt, wie sich die Faserorientierungen 11, 12 durch das Faserhalbzeug 9 erstrecken, wobei die 0 GRAD-Orientierung 11 im Zentralbereich angeordnet ist und in den Außenbereichen 4, 6 variabel einstellbare, die Krümmung erzeugende Faserorientierungen 12 darstellbar sind, in der gezeigten Ausführung in etwa 45 GRAD. Im ersten und zweiten Außenbereich 4, 6 erstrecken sich über die gesamte Länge des Faserhalbzeugs 9 jeweils ein Prozessrand 10, der für die funktionellen Eigenschaften des Bauteils später von untergeordneter Rolle ist, und somit mit kostengünstigeren Fasern gebildet werden kann. Derartige Prozessränder 10 sind beispielsweise für die nachfolgenden Umformverfahren günstig, da die nur für das Umformverfahren nötigen Bereiche des Faserhalbzeugs nicht mit dem teuren Werkstoff des Zentralbereichs gebildet werden müssen und das gesamte Bauteil somit kostengünstiger wird. Der Prozessrand 10 ist in Figur 2 zur Veranschaulichung verhältnismäßig größer dargestellt als er tatsächlich wäre.

Der Flechtprozess entlang der vorbestimmten Krümmung der Abzugsvorrichtung 7 mit drei Faserorientierungen 11 ,12, bei dem um die 0 GRAD-Orientierung 11 in Querrichtung ein möglichst breiter Zentralbereich 5 geflochten wird, ermöglicht ein über die gesamte Fläche gleichmäßiges Faserhalbzeug, bei dem die Faserstruktur im ersten, stärker gekrümmten Außenbereich 4 nur geringfügig von der im zweiten Außenbereich 6 abweicht.

## Patentansprüche

1. Verfahren zur Herstellung von Faserhalbzeugen, wobei eine Flechtvorrichtung (1) eine Vielzahl von Fasern (2, 2', 2") in ein bandförmiges Geflecht (3) mit in Querrichtung gesehen einem ersten Außenbereich (4) und einem zweiten Außenbereich (6) flechtet, wobei die Fasern (2, 2', 2") im geflochtenen Zustand von einer Abzugsvorrichtung (7) aufgenommen werden, die zumindest abschnittsweise entlang einer Maschinenrichtung eine vordefinierte Krümmung aufweist, wobei das Flechten der Fasern (2, 2', 2") im ersten Außenbereich (4) zur Erzeugung der Krümmung im Faserhalbzeug mit einer größeren Abzugsgeschwindigkeit als im zweiten Außenbereich (6) erfolgt, **dadurch gekennzeichnet, dass** als Abzugsvorrichtung (7) eine gekrümmte Laufkette oder eine gekrümmte Raupenabzugsvorrichtung verwendet wird.

2. Verfahren nach Anspruch 1, **dadurch gekennzeichnet, dass** das Faserhalbzeug entlang seiner Mittelachse in Maschinenrichtung einen Zentralbereich (5) mit vorbestimmter Breite aufweist.

3. Verfahren nach zumindest einem der vorigen Ansprüche, **dadurch gekennzeichnet, dass** das Flechten über den gesamten Flechtprozess entlang dreier Faserorientierungen erfolgt, wobei eine Mittelachse des Geflechts (3) einer 0 GRAD-Orientierung entspricht und die ersten und zweiten Außenbereiche (4, 6) mit je einer ± 20-80 GRAD-Orientierung zur 0 GRAD-Orientierung geflochten werden.

4. Verfahren nach zumindest einem der vorigen Ansprüche, **dadurch gekennzeichnet, dass** als Fasermaterial Kohlenstoffasern und/oder Glasfasern und/oder Aramidfasern verwendet werden.

5. Verfahren nach zumindest einem der vorigen Ansprüche, **dadurch gekennzeichnet, dass** im ersten und zweiten Außenbereich (4, 6) zumindest abschnittsweise kostengünstigeres Fasermaterial als im Zentralbereich (5) eingesetzt ist.

6. Verfahren nach zumindest einem der vorigen Ansprüche, **dadurch gekennzeichnet, dass** zumindest Abschnitte des ersten und zweiten Außenbereichs (4, 6) jeweils als Prozessrand für das Imprägnieren und Umformen ausgebildet sind.

7. Verfahren nach zumindest einem der vorigen Ansprüche, **dadurch gekennzeichnet, dass** die Abzugsvorrichtung segmentiert ist.

8. Verfahren zur Weiterverarbeitung eines Faserhalbzeugs hergestellt nach einem Verfahren nach zumindest einem der vorigen Ansprüche, **dadurch gekennzeichnet, dass** das Faserhalbzeug mit einem Binder zu einem Zwischenprodukt vorfixiert wird.

9. Verfahren nach dem vorigen Anspruch, **dadurch gekennzeichnet, dass** das Zwischenprodukt mit Harz imprägniert und anschließend in eine Endform umgeformt wird.

## Claims

1. A method for producing semi-finished fibre products, wherein a braiding device (1) braids a large number of fibres (2, 2', 2") into a strip-shaped braid (3) with, viewed in the transverse direction, a first outer region (4) and a second outer region (6), wherein the fibres (2, 2', 2") in the braided state are taken up by a takeoff device (7) which, at least in portions, has a predefined curvature along a machine direction, wherein the braiding of the fibres (2, 2', 2") in the first outer region (4) to produce the curvature in the semi-finished fibre product takes place at a greater takeoff speed than in the second outer region (6), **characterised in that** a curved track or a curved caterpillar takeoff device is used as takeoff device (7).

2. A method according to Claim 1, **characterised in that** the semi-finished fibre product has a central region (5) of predetermined width along its central axis in the machine direction.

3. A method according to at least one of the preceding claims, **characterised in that** the braiding throughout the entire braiding process takes place along three fibre orientations, with a central axis of the braid (3) corresponding to a 0-degree orientation and the first and second outer regions (4, 6) being braided with a ± 20-80-degree orientation to the 0-degree orientation in each case.

4. A method according to at least one of the preceding claims, **characterised in that** carbon fibres and/or glass fibres and/or aramid fibres are used as fibre material.

5. A method according to at least one of the preceding claims, **characterised in that**, at least in portions, more inexpensive fibre material is used in the first and second outer region (4, 6) than in the central region (5).

6. A method according to at least one of the preceding claims, **characterised in that** at least portions of the first and second outer region (4, 6) are formed in each case as a process edge for the impregnation and shaping.

7. A method according to at least one of the preceding claims, **characterised in that** the takeoff device is segmented.

8. A method for further processing a semi-finished fibre product produced according to a method according to at least one of the preceding claims, **characterised in that** the semi-finished fibre product is pre-fixed to an intermediate product with a binder.

9. A method according to the preceding claim, **characterised in that** the intermediate product is impregnated with resin and then shaped into a final form.

## Revendications

1. Procédé de fabrication de produits semi-finis à base de fibres, selon lequel un dispositif de tressage (1) tresse un ensemble de fibres (2, 2', 2") selon une tresse (3) en forme de bande ayant, considéré en direction transversale une première zone externe (4) et une seconde zone externe (6), les fibres (2, 2', 2") étant recueillies à l'état tressé par un dispositif d'étirage (7) qui a une courbure prédéfinie, au moins par segments, le long du sens de la machine, pour obtenir la courbure dans le produit semi-fini à base de fibres, le tressage des fibres (2, 2', 2") étant effectué, dans la première zone externe (4), avec une vitesse d'étirage plus grande que dans la seconde zone externe (6),
**caractérisé en ce qu'**
en tant que dispositif d'étirage (7) on utilise une chenille ou un dispositif d'étirage à chenilles courbe.

2. Procédé conforme à la revendication 1,
**caractérisé en ce que**
le produit semi-fini à base de fibres comporte, le long de son axe médian dans le sens de la machine, une zone centrale (5) ayant une largeur prédéfinie.

3. Procédé conforme à au moins l'une des revendications précédentes,
**caractérisé en ce que**
pendant la totalité du procédé de tressage, le tressage est effectué le long de trois orientations des fibres, l'axe médian de la tresse (3) correspondant à une orientation de 0 degré et la première et la seconde zones externes (4, 6) étant tricotées avec chacune une orientation de ± 20-80 degrés par rapport à l'orientation de 0 degré.

4. Procédé conforme à au moins l'une des revendications précédentes,
**caractérisé en ce qu'**
en tant que matériau à base de fibres on utilise des fibres de carbone et/ou des fibres de verre et/ou des fibres d'aramide.

5. Procédé conforme à au moins l'une des revendications précédentes,
**caractérisé en ce que**
dans la première zone externe et dans la seconde zone externe (4, 6) on utilise au moins par segments un matériau à base de fibres moins onéreux que dans la zone centrale (5).

6. Procédé conforme à au moins l'une des revendications précédentes,
**caractérisé en ce qu'**
au moins des segments de la première zone externe et de la seconde zone externe (4, 6) sont respectivement réalisés en tant que bord de process pour l'imprégnation et la mise en forme.

7. Procédé conforme à au moins l'une des revendications précédentes,
**caractérisé en ce que**
le dispositif d'étirage est segmenté.

8. Procédé de retraitement d'un produit semi-fini à base de fibres obtenu par la mise en oeuvre d'un procédé conforme à l'une quelconque des revendications précédentes,
**caractérisé en ce que**
le produit semi-fini à base de fibres est préalablement fixé avec un liant pour obtenir un produit intermédiaire.

9. Procédé conforme à la revendication précédente,
**caractérisé en ce que**
le produit intermédiaire est imprégné avec de la résine puis est mis à sa forme finale.
